# EUROPEAN PATENT APPLICATION

(11) **EP 4 672 117 A1**
(43) Date of publication of application: **31.12.2025**
(21) Application number: 24185290.4
(22) Date of filing: 28.06.2024
(51) Int. Cl.: G06Q 20/18, G06Q 20/20, G07G 1/00, G07G 1/14

(54) **SELF-CHECKOUT SYSTEM CONTROLLING DEVICE AND METHOD FOR CONTROLLING A SELF-CHECKOUT SYSTEM**

(71) Applicant: Diebold Nixdorf Systems GmbH, 33106 Paderborn (DE)
(72) Inventor: GHARIBI, Arash, 10557 Berlin (DE); KIRSCHKE, Uwe Friedrich Helmut, 13505 Berlin (DE); HIPELIUS, Ralf Christian, 33106 Paderborn (DE)
(74) Representative: Viering, Jentschura & Partner mbB Patent- und Rechtsanwälte

(57) **Abstract**

According to various embodiments, a self-checkout system controlling device is described, comprising an input interface configured to receive, from self-checkout devices of a plurality self-checkout devices of a self-checkout system, messages including information about an operation of the self-checkout devices, a controller configured to determine actions in reaction to the messages and an output interface configured to transmit commands to the plurality of self-checkout devices and/or one or more further devices according to the determined actions.

## Description

The present disclosure relates to self-checkout system controlling devices, in particular implementing a smart attendant assignment system and methods for monitoring and controlling self-checkout systems.

Automatic checkout systems, i.e. self-service checkouts or self-checkouts (SCOs), are used for example in retail outlets such as supermarkets. The goods selected by the customers and to be paid for are recorded by the customers themselves by moving a barcode applied to the goods past a recording unit, which is designed as a barcode scanner (which may also be handheld scanner), so that the goods to be paid for can be recorded. There may be measures to ensure that the customers properly record the goods (to avoid shrinkage, i.e. intended or unintended fraud), like cameras and (security) scales for checking the weights of the goods.

Nowadays with the increase in number of SCOs in the retail environment and a wider use of self-service checkouts, retailers are facing the challenge of prioritization and resource allocation (in particular of human attendants) to SCOs (each SCO is also referred to as a (self-checkout) "lane") at the right time and at the right SCO. The severity of this challenge is increasing as more and more peripherals (scales, cameras, devices for payment such as card readers etc.) and devices are connected to SCOs, and more and more attendant calls (in particular by customers who need help or automatically by an SCO in case a possible shrinkage is detected) are made:

As the number of security scales increase in a store, the weight model behind the scale also needs to evolve and in case of any mismatch, attendant calls are made by the SCOs.
- In case of buying age restricted items, like alcohol and else, a human attendant will be called by the system to verify the age of the customer.
- As the number of cameras connected to the SCOs increase, more complex algorithms are used (e.g. by a self-service application (SSA) running on the SCOs) with more complex configurations and connections which may lead to more attendant calls in case of any interruption in their process.
- Cash devices as they are typically present in the SCOs to allow payment in case are complex systems where many different error cases (types of incidents, i.e. disturbances) such as reaching the limit of the overflow box, mismatch in denomination, unfit coin or cash, foreign object in the system and etc. lead to attendant calls.
- At certain times (e.g. before public holidays, specific times of the day, before weekends and etc.) the number of customers in the store increases and this challenges the availability of the attendants in case of attendant calls at the right time on the right SCOs, resulting in customer frustrations.
- Artificial Intelligence (AI) is more and more used in the retail environment for the purpose of shrink detection as well as item recognition. AI tools (e.g. for object detection) may be configured to watch over various use-cases of shrinkage at the SCOs. Depending on the setup and the configuration of the various use-cases (in particular which shrink cases are detected by them), they may generate blocking or non-blocking attendant alerts.

In most of the above cases which lead to attendant calls, SCO operation is interrupted (e.g. a transaction by the self-service application (SSA) is interrupted) and blocked and the customer needs to wait for an attendant to come over to the SCO and unblock the SCO (i.e. in particular the SSA). The notification of the attendants is usually done via a pole-light of the SCO or in some cases, using a push notification to an attendant station and or an attendant wearable device.

Looking at the retail's landscape, as the number of SCO in the retailers increase, so does the number of attendant calls. In fact, in a busy retail environment with many different lanes and transactions, there are many attendant calls per hour and day. Besides the attendant calls, attendants are also in charge of various other in-store activities such as watching for shrinkage cases, customer assistance and etc. With this number of tasks for attendants, providing the frictionless shopping experience to the customers may fail, resulting in customers frustration, attendant frustration, less customer satisfaction, lower attachment rate for the SCO journey etc.

Accordingly, efficient approaches for controlling an SCO system (comprising multiple SCOs), in particular with respect to error cases (types of incidents) which need to be handled by attendants, are desirable.

According to various embodiments, a self-checkout system controlling device is provided, comprising an input interface configured to receive, from self-checkout devices of a plurality self-checkout devices of a self-checkout system, messages including information about an operation of the self-checkout devices, a controller configured to determine actions in reaction to the messages and an output interface configured to transmit commands to the plurality of self-checkout devices and/or one or more further devices according to the determined actions.

According to a further embodiment, a method for controlling a self-checkout system according to the self-checkout system controlling device described above is provided.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a part of a store including a self-checkout area (SCA) according to an embodiment.
Figure 2 illustrates an SCO (self-service checkout or self-checkout self-service checkouts or self-checkouts, i.e. self-checkout device) according to an embodiment.
Figure 3 shows a smart customer dashboard (SCD) which gives an overview of the available SCOs (also referred to as "lanes", although customers may also queue in a common lane for multiple SCOs and go one-by-one to each SCO) within a self-checkout zone (SCZ).
Figure 4 shows an attendant dashboard.
Figure 5 shows an example for a shrinkage security dashboard (SSD) which provides a visualization of the SCO availabilities on different SCZs.
Figure 6 illustrates a shrinkage configuration dashboard.
Figure 7 shows a self-checkout system controlling device according to an embodiment.
Figure 8 shows a flow diagram illustrating a method for controlling a self-checkout system.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

The following terms are used in the following detailed description:
- SCO: SCO device implemented by self-checkout Hardware, also denoted as "lane".
- SCA: self-checkout area - the entire area in the retail environment where self-checkout can be done as well as where attendant stations are placed and are available. There can be multiple self-checkout zones in the SCA. There may also be multiple self-checkout areas in a store.
- SCZ: self-checkout zone - the area composed of two or more SCOs and at least one dedicated attendant with an attendant (possibly mobile) station.
- AS: attendant station hardware - the device where an attendant can watch over the SCOs and SCA through the smart attendant dashboard.
- SAD: smart attendant dashboard - a software visualization tool which provides an overview of the incidents on the SCO lanes within the SCO zones with two different types:
   ∘ Portable Data Terminal (PDT) or Enterprise Digital Assistant (EDA) - a mobile phone, mobile scanner, a tablet/tablet PC, a smart watch or data glasses equipped with the SAD.
   ∘ SSAD: stationary smart attendant dashboard - a stationary PC equipped with a SAD.
- SSA: self-service application - the application running on the SCO.
- SAA: smart attendant assignment - a software method which helps assigning/organizing the incidents on various touchpoints (attendant, store admin and security monitors & dashboards).
- SSSM: self-service security monitor - a monitor, e.g. mounted on top of a SCO pole or to the ceiling
- VSSSM: virtual self-service security monitor - a virtual window within the SSA GLTI (graphical user interface) which visualizes the video stream.
- MAD: master attendant dashboard - a software visualization tool which provides an overview of all of the SCOs within the store to the store administrator within the dedicated zones.
- SCD: smart customer dashboard - a software visualization tool which provides an overview of the available SCOs and available functionalities of the SCOs. The visualization of the dashboard is for example shown on a screen mounted on the ceiling of the SCA.
- SSD: shrinkage security dashboard - a software visualization tool which allows security personnel 122 in at the exit gate to watch over the possible fraud & shrinkage cases.
- Shrinkage: refers to the loss of inventory at the retailer due to intentional or unintentional acts of the customers and/or shop keepers.
- Shrink Reduction: the process of early identifying the possible shrinkage (intentionally or unintentionally) before the actual shrinkage happens.

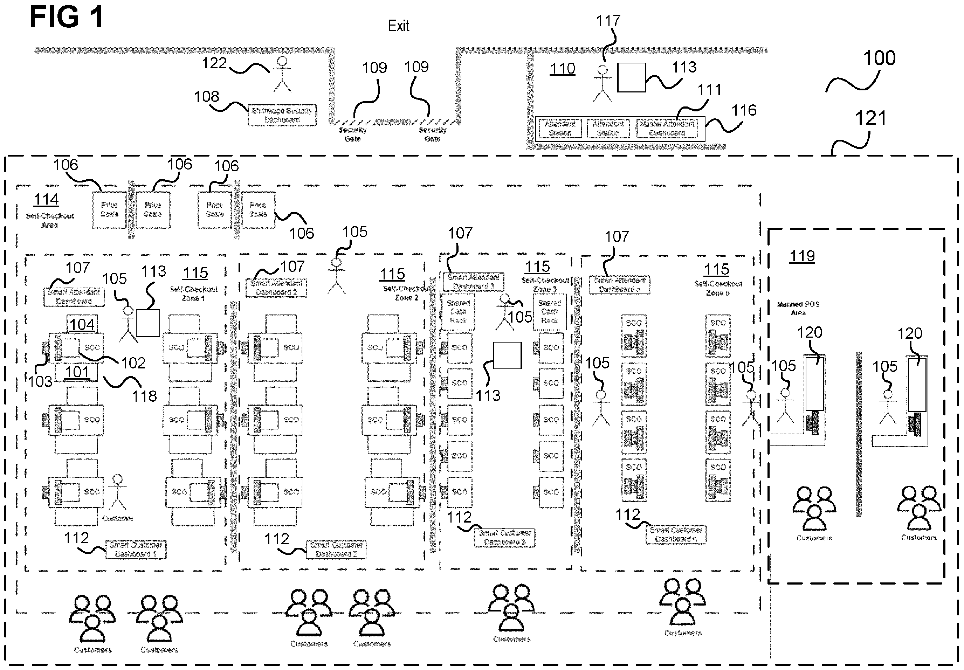

Figure 1 shows a part of a store 100 including a self-checkout area (SCA) 114 according to an embodiment.

The SCA 114 comprises multiple SCOs 118, wherein each SCO 118 is equipped with a self-service shelf 101 where customers put their merchandise on, an SCO scanning area 102, where the vertical scanner or the horizontal scanner or the bioptical scanner and/or a handscanner (for scanning barcodes by the customers) is placed, an SCO pole light 103 equipped with different colours and a self-service scale 104 where the customers place their scanned merchandise.

The SCOs 118 are grouped into self-checkout zones (SCZs) 115 and at least one attendant 105 per SCZ watches over the SCZ 115.

For each SCZ 115, there is a SSAD 107 which allows the attendant(s) 105 to have an overview on the status of the SCOs in the SCZ 115.

Outside of the SCA 114, there are price scales 106 equipped with price labels for the case where customers have forgotten to weigh their fresh merchandise.

Further, outside of the SCA 114, there is an SSD 108 which informs security personnel in case shrinkage happens on the SCOs 118. The store 100 for example comprises a smart exit gate 109 where customers have to present their receipt to be able to leave the store.

The store 100 further comprises a back-office area 110 where a (central) self-checkout system controlling device (or system) 116 is placed. The self-checkout system controlling device 116 for example comprises (or consists of) one or more attendant stations and runs the SAA. Here, a head attendant (e.g. store administrator or supervisor) 117 is able to (centrally) watch over all the SCOs 118 as well as the manned POS (Point of Sales) checkout lanes of the manned checkouts 120. For this, the back-office area 110 is equipped with an MAD 111 (which may also run on the attendant station 116) which allows the head attendant 117 to have an overview on the entire SCA 114, i.e. all SCOs within the store.

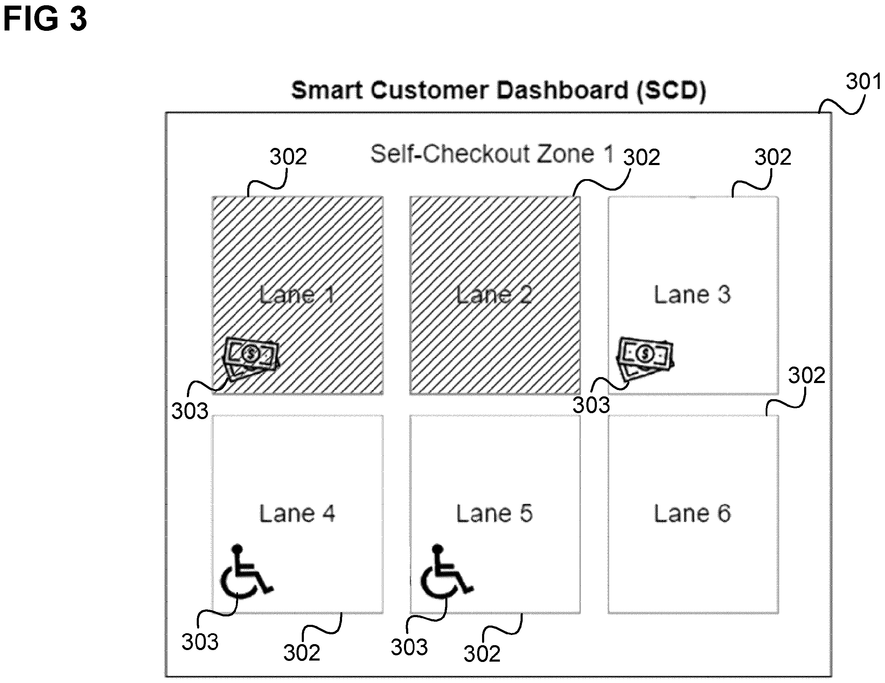

The SCZs 115 are equipped with SCDs 112 (see figure 3) which provide an overview to the customers in the waiting queue about the status of the SCZ if it is closed or open and the available SCOs within this SCZ and their connected peripherals like electronic payment terminals, or electronic payment terminals with cash devices. The SCDs 112 may also indicate the presence of possible special equipment at the different SCOs like the allowed basket size for instance the allowed number of purchased items at the different SCOs or trolley usage with undefined number of items.

Attendants 105, 117 may be equipped with mobile or wearable attendant device 113 (e.g. a portable terminal device (PDT) or an enterprise digital assistant (EDA)) or data glasses which can help the attendant to remotely get information or change the status of an SCO 118, send messages to an SCD 112, the MAD 111 or other attendant devices 113 (e.g. according to an attendant assignment determined by an SAA).

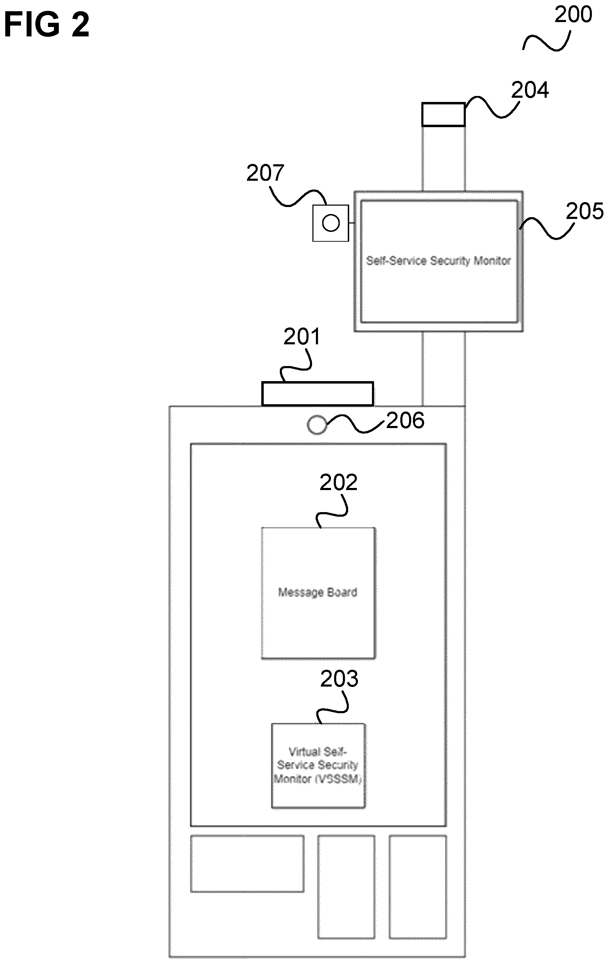

Figure 2 illustrates an SCO 200 according to an embodiment.

The SCO 200 (corresponding to one of the SCOs 118 of figure 1) is equipped with a self-checkout status light 201, where different colours and blink effects signal to the customer when an attendant will arrive depending on the severity of an incident at the self-checkout 200 in case of an incident. The SCO 200 may for example notify the attendant device 105 or the SSAD 107 to call an attendant.

The SCO 200 runs an SSA which has a message board 202, where visually the SSA presents when an attendant will arrive in case of an incident (at least in case that the incident blocks SSA operation).

The SSA further comprises a VSSSM 203 which shows a video stream of the SCO 200, e.g. from a camera built into the SCO 200 or attached to the VSSSM or mounted above the SCO 200. This can also be shown in a pop-up window within the SSA GLTI. The same video stream may also be displayed on the SCA 107 and the SSAD 107 and the MAD

The SCO 200 may further be equipped with an SCO pole light 204 which visualizes the overall status of the SCO 200. Further, an SSSM 205 which may show the video stream (shown by the VSSSM 203) in a separate display, e.g. in a monitor above the SCO 200 such that it is visible by passing attendants.

The SSSM 205 may be equipped with a camera 207 which is for example used to check the age of the customer or observes the person and its behaviour in front of the SCO and may also be used to generate the video stream shown by the VSSSM 203.

The SCO 200 further includes a further camera 206 which is for example used to check the age of the customer and may also be used to generate the video stream shown by the VSSSM 203.

It should be noted that the SCO 200 of figure 2 is only an example and there are other types of the SCOs which look different and also have different characteristics, e.g. have a double screen, a shared-cashrack, etc.

An example of an SCD 112 is given in figure 3.

Figure 3 shows a smart customer dashboard (SCD) 301 which gives an overview of the available SCOs (i.e. lanes) within a SCZ 115 as long as this SCZ is opened for customers. Else it will show that this SCZ closed.

The SCD 301 includes, for each lane in the SCZ 115, an indication 302 of the status of each lane, i.e. whether it is open or closed. The indication 302 may include icons 303 indicating whether certain features (capabilities) are available in the respective lane (i.e. supported by the respective SCO), for example whether the lane has cash components or is accessibility friendly.

So, according to various embodiments, the SCD 112 of an SCZ 115 provides an overview for all available SCOs at the SCZ 115 with various states to the customers queuing, e.g.:
- All lanes closed (i.e. SCZ closed) when there is no attendant at the SSAD 107 of the SCZ 115.
- SCZ open: shows the availability of SCOs within the SCZ 115 as to whether a SCO is available to be used or is in-use.
   ∘ Further provides indication about SCO type or capability such as cash or non-cash.

The SAA may control the SCD 112 to show lanes with higher priority (e.g. on the first places on the list shown by the SCD 112), when there are various functionalities available on the SCO.

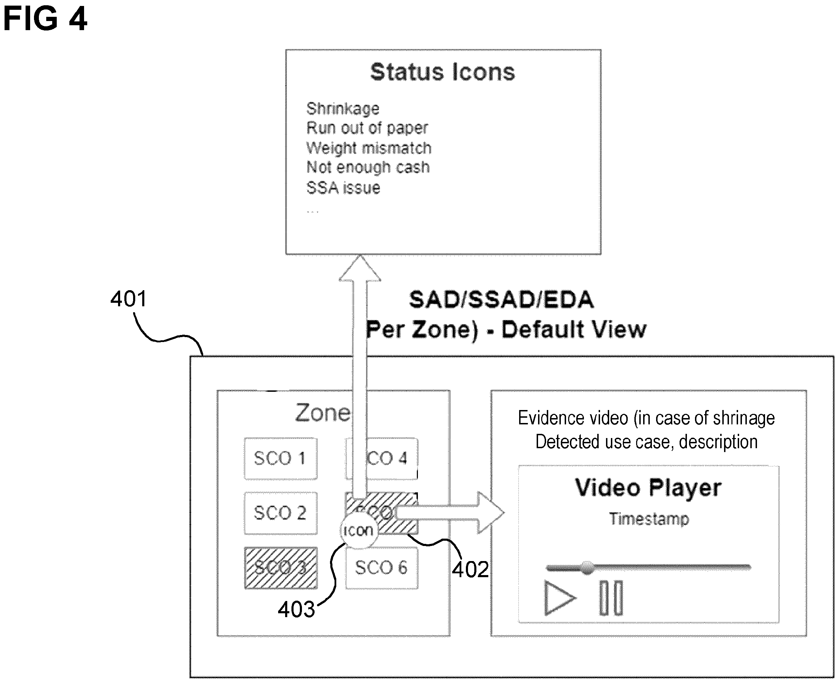

Figure 4 shows an attendant dashboard 401 including in particular a visualization of the blocking states of SCOs which for example is part of a SAD and may for example be shown on an SSAD 107 (for the SCOs of the respective SCZ 115) or attendant device 107.

The attendant dashboard 401 includes a visualization for the entire SCZ 115 for which an attendant is responsible, e.g. with the same SCO layout (i.e. arrangement of SCOs) as in the SCZ 115.

In the example of figure 4, there is an SCO which has a blocking attendant call (i.e. SCO operation is blocked until the attendant arrives and unblocks it). An icon 403 on the visual representation 402 of the SCO illustrates the specific SCO blocking state (of multiple possible blocking states). The blocking state could for example be due to mismatching weight of the article, actual shrinkage scenario, required age verification or the like.

For example, the SCO blocking state is due to shrinkage detection which is associated with an evidence video which the attendant may watch on the SSAD 107 or SSD 108 or MAD 111 using a video player 404 together with a description 403 of the use case or possibly on an attendant device 113.

For example, upon tapping on the icon of the blocked SCO by the attendant, a pop-up window provides more details about the reason of blocking.

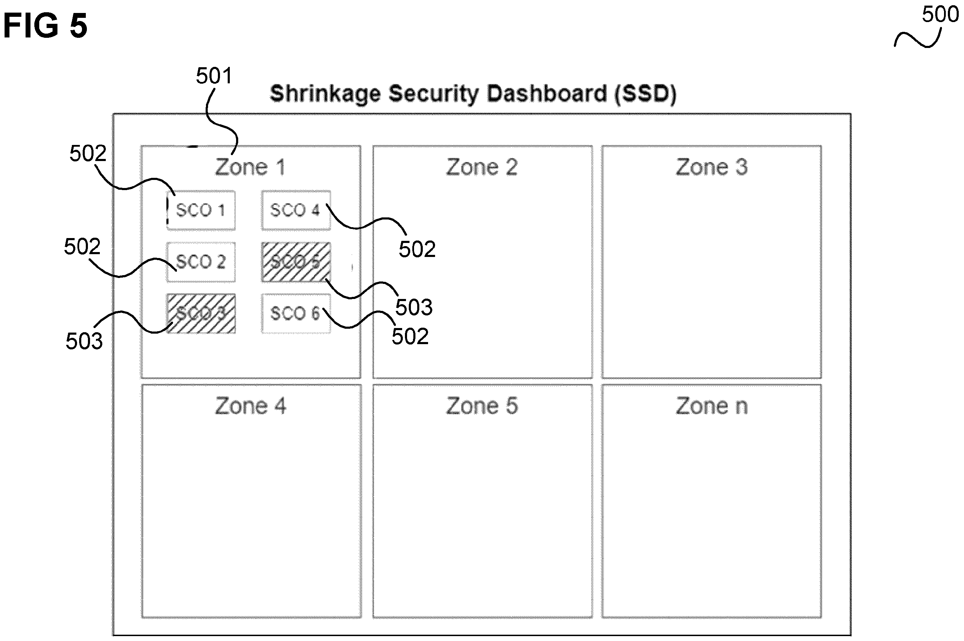

Figure 5 shows an example for an SSD 500 which provides a visualization of the SCO availabilities on different SCZs 115.

The SSD 500 indicates, for each SCZ 115 for which it visualizes SCO availabilities, a zone designation (e.g. name and or number) 501.

A "green" state (here shown without hatching) 502 indicates the SCOs which are available and can be used by customers.

A "red" state (here shown with hatching) 503 of an SCO indicates blocked SCOs and upon tapping on those on the SSD 500 (or MAD 111 which may also show this kind of visualization), an operator (attendant, security personnel and/or supervisors like store administrators) are presented with more details as to what the blocking reason is.

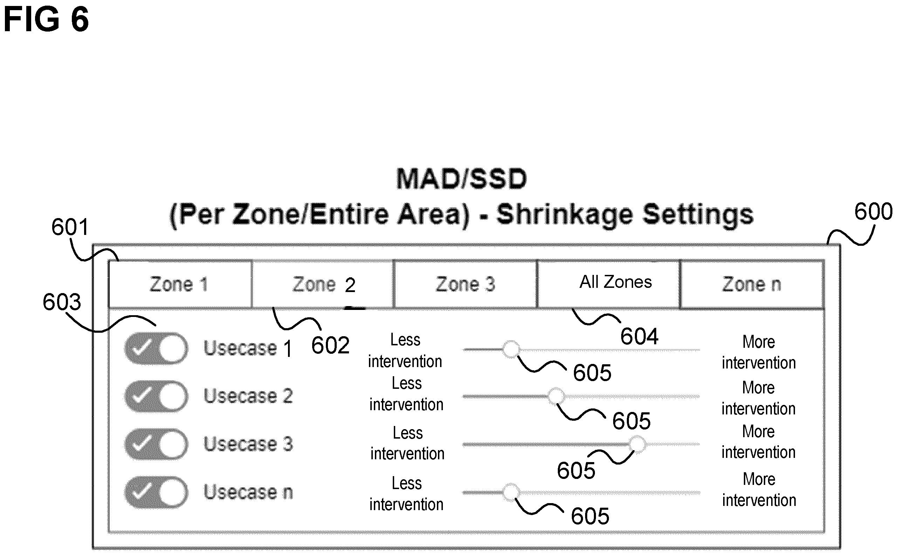

Figure 6 illustrates a shrinkage configuration dashboard 600 which may be shown on the MAD 111 and/or an SSD 500.

The shrinkage configuration dashboard 600 gives an indication of the SCZ for which it currently visualizes the use case (shrinkage handling) configuration, e.g. by highlighting one of multiple tabs 601, 602, 604 which may include a tab 604 to allow configuring the use cases for all SCZs at once.

The shrinkage configuration dashboard 600 shows a list 603 of use cases with configuration elements (here sliders 605 but drop-down menus etc. are also possible) allowing the operator to configure (in particular introduce) shrinkage handling for different use cases in the store (for the SCZ(s) of the selected tab 601, 602, 604). The shrinkage use cases may include various different use cases including but not limited to starting payment without having scanned all goods, only partially scanning goods (e.g. only one product of a stack), switching barcodes etc. These use cases may be detected by various means, e.g. by object detection from a camera image using an AI tool or by weight monitoring. According to one embodiment, it may be configured on the MAD 111 whether the SSAD can see and/or access the shrinkage configuration dashboard 600.

Using self-checkout system as described above with reference to figures 1 to 6, a retailer can increase customer satisfaction, attachment rate to the SCOs and provide a frictionless customer journey.

With respect to an attendant 105 perspective, according to various embodiments,
a. The SAA running on the self-checkout system controlling device 116 prioritizes and allocates an attendant or multiple attendants to different types of SCOs 118 (cash/non-cash, wall mounted, w/o security scale, w/o printer, hybrid, different containers, self-scan support) at the right time, to the right lane and visualizes the results on the SAD and the MAD 111.
b. In case of an incident, a status light on the SCO 118 (e.g. the pole-light 103, 204) and a virtual status light - available on the SSA running on the SCO- can both indicate the problem (i.e. disturbance) and description (to an extent). Accordingly, the SAD and the MAD 111 also show the position of the SCO 118 (which has the disturbance) with a corresponding incident description. Also, in case of a shrinkage incident, the SSD 108 may indicate the incident with the type of incident.
c. The SAA performs the prioritization of the incidents for one or more attendants based on their proximity to the SCO 118 (affected by the incidents), availability, and severity of the incidents.
d. An inner room routing map may be implemented in or provided to the SAA such that the SAA can help attendants 105 to find the right SCO 118 in case of an attendant call. Examples for incidents for which the SAA decides that an attendant intervention is necessary are:
   ∘ Customer placed the wrong item on the security scale.
   ∘ Customer did not scan an item.
   ∘ Printer is out of paper.
   ∘ A customer at the SCO 118 attempted intentionally or unintentionally to perform a malicious activity which was identified as shrinkage.
e. The SAA also could automatically identify the layout of the SCOs 118 and accordingly the attendants relative to the SCOs 118 as well as their level of permissions. This layout is for example made visible to the MAD 111.
f. The SCO status light 201 or SCO pole light 204 may visualize the severity and the attendant's arrival time at the lane either by colour-rate or blink-rate; this status can be also accordingly visible on the SAD and the MAD 111. For example:
   a. The time-interval between the blinks on the status light, defines the severity of the issue on the lane.
   b. The colour of the status light illustrates the priority of the incident. For example, red illustrates the highest priority.
g. the SAA provides the functionality to hand over handling of incidents from one attendant to another attendant for example in case of a shift-end. The result of such a hand over is for example shown on the SAD and/or MAD 111.
h. the SAA provides the functionality to start a voice communication between MAD 111 and attendant 105 equipped with a PDT, data glasses or walkie talkie like communication between attendant 105 and store security personnel 122
   and/or
i. the SSA provides an incident ID with timestamp

With respect to a back office (e.g. store administrator or master attendant) perspective, according to various embodiments,
a. The SAA allows the store administrator to have an overview of the incidents and SCO (lane) status.
b. The SAA allows the store administrator to define the layout of the store as well as the number of attendants per SCO zone 115.
c. The SSA allows the store administrator to configure, in particular activate or deactivate, specific use-cases of shrink detection. For example, depending on the store occupancy, the store administrator is able to increase or decrease the sensitivity of the particular use-cases of the shrinkage. The SSA (i.e. the self-checkout system controlling device 116) configures the SCOs 118 (e.g. the SSAs) accordingly to watch over these use-cases (e.g. by sending corresponding commands to the SCOs) and/or
d. The SSA trigger loudspeaker announcements.

With respect to a customer perspective, according to various embodiments,
a. The SCD 112 shows information to the customers who are queuing to use the SCOs 118 about the availability of the SCOs (before using the SCO).
b. The SSA provides a virtual button on the SCO GUI which allows customers to call for help (attendant call or attendant request), e.g. in one or more of the following situations:
   ∘ Assistance in case of disability
   ∘ Questions or issues with the merchandise
   ∘ Barcode or price-tag issues
   ∘ Scanning issues
   ∘ Weight of goods issues
   ∘ Product recognition issues through Artificial Intelligence (AI) detections
   ∘ Discounted price tag recognition issues
c. The SSA provides the functionality to visualize specific colours of the status light of the SCO as well as the SSA display, SSSM 205 and/or SCD 112, indicating that the lane will be shortly opening or closing.
d. While using an SCO 118, in case of issue (e.g. as given under b), depending on the priority of the attendant call (e.g. set by the SAA), the pole light 103, 204 turns on with non-blinking light (waiting for an attendant).
e. The VSSSM 203 and/or the SSSM 205 (when corresponding hardware is available) also provide the information about the status of d. Moreover, the SSSM 205 may present the prioritization of the attendant call within the SCZ 115.
f. As soon as an attendant takes an attendant request in the SCA 114, the pole lights 103, 204 starts to blink.
g. An attendant can take an attendant request remotely using the attendant device 113 or from the SSAD 107. Also, an attendant can take the request at the SCO using the authorization method (swiping the RFID, attendant keylock, entering the code, etc.) which accordingly makes the pole light to blink.
   and/or
h. As soon an attendant takes the attendant request from an SCO, a corresponding pop-up is shown on the SSA GUI of the SCO.

With respect to a self-checkout perspective, according to various embodiments,
a. The SSA of an SCO 118 may indicate (i.e. show) status information about the SCO on one or more SSSMs (in case they are provided) and/or the SCD 112.
b. The SAA provides an overview of the incidents, a list of incident IDs with timestamps, resolution lead time, frequency of the same incidents per lane and incidents per time interval on the MAD 111.
c. The SAA allows the store administrator to create a service call manually or automatically to field technicians in case an incident is too severe to be resolved.
d. The SAA guides customers to the available SCOs 118 depending on their availabilities, payment possibilities, available peripherals and basket size
e. Depending on the type of incident (e.g. printer paper out of stock), the SSA provides information about the incidents to the SAA in form of web services, so that the SAA can change the guidance (e.g. provide instructions to resolve the issue) for the customer on the SSA. In the case of printer out of paper, customers who want to have digital receipts could still use the SCO, although the status light shows a certain colour or icon - which is configurable - indicating limitations (here: printed receipt not available) with the SCO on the SCD.
f. The SAA for example sets the highest priority on shrinkage cases (incidents of (possible) shrinkage, i.e. detected (possible) shrinkage) on the lanes as well as SCO zones 115 over other SCO incidents and accordingly prioritizes the shrinkage incidents for the attendants. The SAA considers the shrinkage use-cases as well as the sensitivity of the certain use-cases while prioritizing the attendant calls. The sensitivity may for example be set by an attendant (e.g. a master attendant) by means of a sensitivity slider 605 which allows the attendant to switch the specific shrinkage use cases on or off and/or set the sensitivity with regard to the various use cases (see figure 3 for an example of sensitivity sliders 605 for a list 603 of use cases). For example, the sensitivity slider 605 for a shrinkage use case defines how the shrinkage (e.g. when detected by an AI model) should be handled (e.g. in terms of a percentage which determines whether there should be a blocking event in the SCO where the shrinkage has been detected), i.e. how the SSA should react to a detection of a shrinkage of the respective use case (i.e. shrinkage type).
   and/or
g. The information of the MAD 111 is also (at least partially) visualized for the SSD 108 for the security personnel 122.

The SAA (of an SCO 118)
a. is a software mechanism/logic which helps increasing the frictionless checkout experience and customer journey at the SCO 118.
b. is triggered both by requests which are coming from a customer (e.g. call for help, in particular for accessibility), as well as requests (e.g. maintenance requests and requests for checking due to shrinkage detection) which come from the components of the SCO system itself or an independent system controlling more than one SCO 118 or manned POS checkout 120. A request can thus be seen to correspond to an incident or disturbance (i.e. the request can be seen as the information or message indicating the incident or disturbance).
c. provides the functionality to automatically assign a ruleset for prioritization of the attendant requests coming within a SCZ 115 as well as the SCA 114:
   (1) the SAA provides various modes by default based on the interest of the store strategy (high checkout flow rate & customer centricity), different situations at the peak times, day of the week, proximity to public holidays, campaign weeks, etc.
   (2) the SAA performs attendant assignments sequentially. In other words, as soon as a request comes from a SCO, it assigns it automatically to the responsible attendant from the SCZ 115 to which the SCO belongs. Then, as soon as a further request comes in, depending on the priority of the further request (blocking - where the SCO 118 is blocked or non-blocking - where the SCO 118 can be further used or predictive - where a printer paper role needs to be replaced in a near future) the SAA assigns an attendant to handle the request - possibly with prioritization - accordingly.
   (3) the SAA assigns requests to other attendants in other SCZs 115 in case the responsible attendant within an SCZ 115 is blocked and other attendants are available.
      (a) The trigger for this assignment can be configured at the MAD 111 by the store administrator based on a threshold (i.e. after a certain time), number of requests (maximum number of requests that an attendant could take care of), type of request (e.g. accessibility, cash device assistance, fraud/shrinkage), requirement by the law, etc.
   (4) SAA priorities can be set by the MAD 111. For example, accessibility issues & fraud/shrinkage topics can be set as the highest priority.
   (5) In case of blocking issues:
      (a) For a request regarding an age verification at an SCO, the SAA assigns the (verification) request automatically to the responsible attendant's attendant device 113 or the SSAD 107 at the SCZ 115.
      (b) For a request regarding a plausibility issue (mismatching weight on the security scale or possible shrinkage cases), SAA assigns the evaluation based on C-4 to the attendant station.
d. Provides the possibility to manually override or reset the automated prioritization algorithm.
e. Provides the possibility to record such overrides or resets.
f. In case of unavailability of attendants in an SCZ 115, automatically assigns attendants from other SCZs 115.
g. When an SCZ 115 is closed, takes care of messaging on the SCD 112 of the SCZ 115.
h. Allows the MAD 111 to override the assigned rulesets on the SAA. The assignment or overriding the rulesets can also be done through an attendant device 113.
i. can alert the SSD in case of a security issue
j. can automatically list available SCO features on the SCD 112
   and/or
k. can support that attendants can transfer a request (i.e. an attendant call) to each other. For this the SAA may for redetermine the attendant assigned to the SCO of which it is part.

The SSD 108 provides an overview on the SCZs 115 across the entire SCA 114 to the security personnel 122 as well as the supervisors and/or store administrators. The security personnel 122 may thus have an overview on different SCO lanes and get an overview as to where an SCO lane is blocked. This overview helps the security personnel 122 as well as a supervisor and or store administrator to watch over for specific use cases like walk aways, unfinished transactions etc. Shrinkage use cases which are active (i.e. configured to be active at the MAD 111) can be also visualized on the SSD 108. The SSD 108 only allows to see the configured use cases in read-only mode. In other words, security personnel 122 are not able to configure the use cases.

The SSAD 107 and/or the attendant device 113 allows attendants to have an overview on their entire SCZ 115. This view can be presented on the SAD running on the SSAD 107 or attendant device 113. In case of a blocking situation (incident) on an SCO 118, attendants are able to see which SCOs are blocked as well as the reason of blocking. In case of having a blocked SCO due to one of the shrinkage use cases, an evidence video can be shown to the attendant which shows the moments where a shrinkage use case happened. For example, in case of a sweethearting use case (i.e. an attendant being involved in the shrinkage), this video is shown by the MAD 111 (i.e. e.g. to a supervisor). According to one embodiment, the MAD 111 and the SSD 108 are composed of different tabs. Each tab visualizes a zone. Additionally, there is also an "All zones" tab which allows to configure all zones at once.

The SSA can be programmed to broadcast time-based information for instance to all SCDs 112, that the shop will be closed soon, and all remaining customers have to use the manned checkout lanes.

According to various embodiments, the self-checkout system controlling device 116 (e.g. the SAA running on the self-checkout system controlling device 116) may also monitor and control the manned checkouts 120. In other words, the self-checkout system controlling device 116 may not only operate as a self-checkout system controlling device 116 but operate as a checkout system controlling device in general, i.e. may monitor and control a checkout system which includes a self-checkout system and may or may not also include manned checkouts. Extending the monitoring and controlling by the self-checkout system controlling device 116 also to manned checkouts 120 may for example be provided since it may be assumed that at least some of the shrinking use cases can also be extended to the manned checkouts 120. The monitoring and controlling of the manned checkouts 120 by the self-checkout system controlling device 116 can in particular include a personnel planning for attendants (e.g. cashiers) of the manned checkouts 120. For example, a resource pool (in terms of attendants) may be managed by the SAA and an associated resource pool view can be displayed by the MAD 111. For establishing the resource pool, a employees may for example log into an employee terminal in the back office. The SAA may assign attendants 105 to the manned checkouts 120 in a similar way as it does for the SOCs 118.

Requests (i.e. incidents or interventions) that may occur at a manned checkout 120 may for example include
a. cashier needs a break
b. cashier needs change
c. cashier needs price information
d. cashier needs permission to reduce price
e. cashier needs cleaning assistance due to liquid spillage
f. cashier needs printer paper
g. cashier needs bags/bags/pouches
h. cashier reports a security incident

For example, an application running on the manned checkouts 120 may display a GUI which provides the respective attendant 105 (i.e. cashier) to trigger these requests.

The SAA may for example one or more of the following functions with respect to the manned checkouts 120
a. Register that a cashier has reported to the manned checkout 120 or to the store manager as being present or back from a break.
b. Show a cashier as being available in the application's resource pool.
c. Allow the store manager to assign a certain cashier from the resource pool to a certain manned checkout 120
d. Show an icon of a certain cashier as flashing yellow in the resource pool view and provides additional such as
   ∘ loudspeaker announcement "We are opening checkout two for you ..."
   ∘ signal light on manned checkout number two starts flashing green
e. Activate shrink monitoring when manned checkout opens
f. Let cashiers log into the checkout system with their identifications (e.g. at the manned checkouts 120)
g. Display the resource pool view showing the icon of a certain cashier as illuminated yellow, for example, with additional information like the assigned manned checkout 120 POS3
h. Display status messages on the MAD 111, such as "checkout 3 open" as a green icon visible to the store manager
i. Display status messages on the SCD 112 such as "checkout 3 open" as a green icon visible to queueing customers
j. Display status messages on SSD 108 such as "checkout 3 open" on the SSD 108 as a green icon visible to the security personnel 108
k. Trigger loudspeaker announcements such as "We are closing checkout 3" in response to a request from a cashier (e.g. pause required) and, in response to such a request,
   ∘ switch signal light on manned checkout 3 from green to red
   ∘ display status message "manned checkout 3 is being closed" on the MAD 111 as a green flashing icon visible to the store manager
   ∘ display status message "manned checkout 3 is closed" on the SCD 112 as a red flashing icon visible to customers standing in line
   ∘ let the cashier logs out of the checkout system with the cashier's ID
   ∘ display the resource pool view to show the icon of the cashier as flashing yellow with additional information "Pause"
   ∘ display message "manned checkout 3 closed" on the MAD 111 as a grey icon visible to the store manager
   ∘ display status message "manned checkout 3 closed" on the SCD 112 as a grey icon visible to customers standing in line.

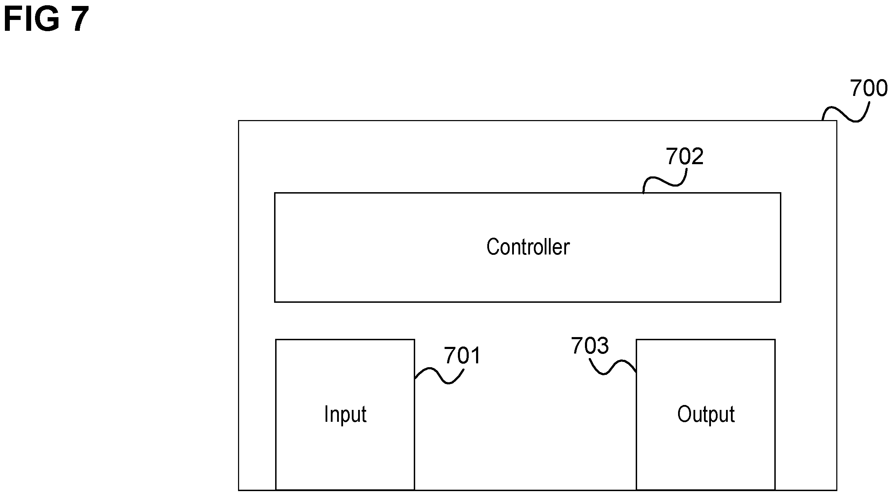

In summary, according to various embodiments, a self-checkout system controlling device is provided as illustrated in figure 7.

Figure 7 shows a self-checkout system controlling device 700 according to an embodiment.

The self-checkout system controlling device 700 comprises an input interface 701 configured to receive, from self-checkout devices of a plurality self-checkout devices of a self-checkout system, messages including information about an operation of the self-checkout devices.

The self-checkout system controlling device 700 further comprises a controller 702 configured to determine actions in reaction to the messages and an output interface 703 configured to transmit commands to the plurality of self-checkout devices and/or one or more further devices according to the determined actions.

According to various embodiments, in other words, a self-checkout system is centrally controlled by a self-checkout system controlling device which gathers data (e.g. about incidents and disturbances but possible also general operation) for the self-checkout system's self-checkout devices and generates commands for carrying out actions it determines from the data. The commands may be directed to the self-checkout devices but also to other devices, such as a device for alerting security personnel 122, blocking a customer from exiting, etc.

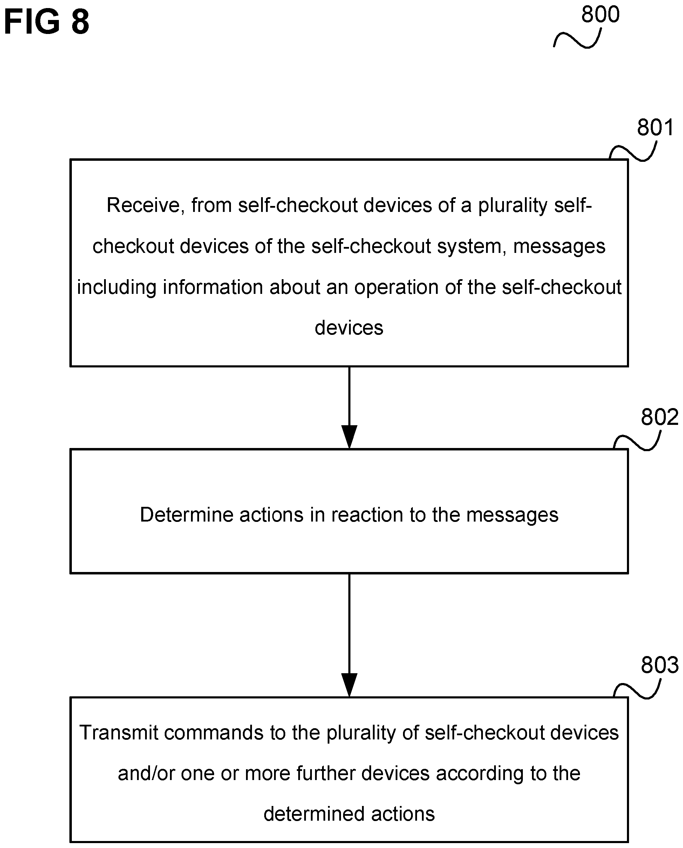

According to various embodiments, a method as illustrated in figure 8 is carried out (e.g. by the self-checkout system controlling device).

Figure 8 shows a flow diagram 800 illustrating a method for controlling a self-checkout system.

In 801, messages including information about an operation of self-checkout devices of a plurality self-checkout devices of the self-checkout system are received from the self-checkout devices.

In 802, actions are determined in reaction to the messages (e.g. taking information included in the messages into account).

In 803, commands are transmitted to the plurality of self-checkout devices and/or one or more further devices according to the determined actions.

Various Examples are described in the following:
Example 1 is a self-checkout system controlling device as illustrated in figure 7.
Example 2 is the self-checkout system controlling device of example 1, wherein the information about the operation of the self-checkout devices includes information about disturbances occurring at the self-checkout devices.
Example 3 is the self-checkout system controlling device of example 2, wherein the actions are actions for handling the disturbances.
Example 4 is the self-checkout system controlling device of example 3, wherein the controller is configured to determine the actions according to a prioritization of the disturbances.
Example 5 is the self-checkout system controlling device of any one of examples 1 to 4, wherein the actions include assigning an attendant to at least one self-checkout device of the self-checkout devices.
Example 6 is the self-checkout system controlling device of any one of examples 1 to 4, wherein the actions include assigning an attendant to at least one self-checkout device of the self-checkout devices to resolve a disturbance of the at least one self-checkout device which was indicated in the information about the operation of the self-checkout devices.
Example 7 is the self-checkout system controlling device of any one of examples 1 to 6, wherein the actions include one or more of
   - blocking operation of at least one self-checkout device of the plurality of self-checkout devices
   - unblocking operation of at least one self-checkout device of the plurality of self-checkout devices
   - configuring at least one self-checkout device of the plurality of self-checkout devices with respect to conditions under which it should block its operation
   - putting at least one self-checkout device of the plurality of self-checkout devices into a standby mode and/or an operational state with limited functionality
   - waking at least one self-checkout device of the plurality of self-checkout devices from a standby mode and/or an operational state with limited functionality
   - issuing an emergency signal, an alarm signal and/or a technician service call
   - displaying that shrinkage has been detected at one of the self-checkout devices
   - visually indicating, for at least one of the self-checkout devices, that there is a disturbance at the self-checkout device
   - visually indicating an expected waiting time for an attendant at one of the self-checkout devices
   - blocking a customer from exiting a store to which the self-checkout system belongs.
Example 8 is the self-checkout system controlling device of any one of examples 1 to 7, wherein the actions include a control of an indication of a status of at least self-checkout device of the plurality of self-checkout devices and the output interface is configured to transmit a command to a display device instructing the display device to visually indicate the status of at least self-checkout device.
Example 9 is the self-checkout system controlling device of example 8, wherein the status includes an availability of the self-checkout device for self-checkout and/or one or more features supported by the self-checkout device.
Example 10 is the self-checkout system controlling device of any one of examples 1 to 9, wherein the information about the operation of the self-checkout devices includes an indication that shrinkage has been detected at at least one of the self-checkout devices and wherein the controller is configured to determine at least some of the actions in reaction to the indication that shrinkage has been detected at at least one of the self-checkout devices.
Example 11 is the self-checkout system controlling device of any one of examples 1 to 10, wherein the commands instruct the plurality of self-checkout devices and/or the one or more further devices to operate in a manner according to the determined actions.
Example 12 is the self-checkout system controlling device of any one of examples 1 to 11, wherein the commands instruct the plurality of self-checkout devices and/or the one or more further devices to operate in a manner to perform and/or initiate the determined actions.
Example 13 is the self-checkout system controlling device of any one of examples 1 to 12, wherein the one or more further devices include one or more handheld or wearable attendant devices.
Example 14 is the self-checkout system controlling device of any one of examples 1 to 13, wherein the one or more further devices include a security screen and/or a security gate.
Example 15 is a method for controlling a self-checkout system as illustrated in figure 8. Example 16 is a computer program element comprising instructions which, when performed by a processor, cause the processor to perform a method according to example 15.
Example 17 is a computer readable medium having instructions stored thereon which, when performed by a processor, cause the processor to perform a method according to example 15.

It should be noted that one or more of the features of any of the examples above may be combined with any one of the other examples. In particular, features described in context of one of the device are analogously valid for the method, the computer readable medium and the computer program element.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A self-checkout system controlling device, comprising:
an input interface configured to receive, from self-checkout devices of a plurality self-checkout devices of a self-checkout system, messages including information about an operation of the self-checkout devices;
a controller configured to determine actions in reaction to the messages; and
an output interface configured to transmit commands to the plurality of self-checkout devices and/or one or more further devices according to the determined actions.

2. The self-checkout system controlling device of claim 1, wherein the information about the operation of the self-checkout devices includes information about disturbances occurring at the self-checkout devices.

3. The self-checkout system controlling device of claim 2, wherein the actions are actions for handling the disturbances.

4. The self-checkout system controlling device of claim 3, wherein the controller is configured to determine the actions according to a prioritization of the disturbances.

5. The self-checkout system controlling device of any one of claims 1 to 4, wherein the actions include assigning an attendant to at least one self-checkout device of the self-checkout devices.

6. The self-checkout system controlling device of any one of claims 1 to 4, wherein the actions include assigning an attendant to at least one self-checkout device of the self-checkout devices to resolve a disturbance of the at least one self-checkout device which was indicated in the information about the operation of the self-checkout devices.

7. The self-checkout system controlling device of any one of claims 1 to 6, wherein the actions include one or more of
• blocking operation of at least one self-checkout device of the plurality of self-checkout devices
• unblocking operation of at least one self-checkout device of the plurality of self-checkout devices
• configuring at least one self-checkout device of the plurality of self-checkout devices with respect to conditions under which it should block its operation
• putting at least one self-checkout device of the plurality of self-checkout devices into a standby mode and/or an operational state with limited functionality
• waking at least one self-checkout device of the plurality of self-checkout devices from a standby mode and/or an operational state with limited functionality
• issuing an emergency signal, an alarm signal and/or a technician service call
• displaying that shrinkage has been detected at one of the self-checkout devices
• visually indicating, for at least one of the self-checkout devices, that there is a disturbance at the self-checkout device
• visually indicating an expected waiting time for an attendant at one of the self-checkout devices
• blocking a customer from exiting a store to which the self-checkout system belongs.

8. The self-checkout system controlling device of any one of claims 1 to 7, wherein the actions include a control of an indication of a status of at least self-checkout device of the plurality of self-checkout devices and the output interface is configured to transmit a command to a display device instructing the display device to visually indicate the status of at least self-checkout device.

9. The self-checkout system controlling device of claim 8, wherein the status includes an availability of the self-checkout device for self-checkout and/or one or more features supported by the self-checkout device.

10. The self-checkout system controlling device of any one of claims 1 to 9, wherein the information about the operation of the self-checkout devices includes an indication that shrinkage has been detected at at least one of the self-checkout devices and wherein the controller is configured to determine at least some of the actions in reaction to the indication that shrinkage has been detected at at least one of the self-checkout devices.

11. The self-checkout system controlling device of any one of claims 1 to 10, wherein the commands instruct the plurality of self-checkout devices and/or the one or more further devices to operate in a manner according to the determined actions.

12. The self-checkout system controlling device of any one of claims 1 to 11, wherein the commands instruct the plurality of self-checkout devices and/or the one or more further devices to operate in a manner to perform and/or initiate the determined actions.

13. The self-checkout system controlling device of any one of claims 1 to 12, wherein the one or more further devices include one or more handheld or wearable attendant devices.

14. The self-checkout system controlling device of any one of claims 1 to 13, wherein the one or more further devices include a security screen and/or a security gate.

15. A method for controlling a self-checkout system, comprising:
receiving, from self-checkout devices of a plurality self-checkout devices of the self-checkout system, messages including information about an operation of the self-checkout devices;
determining actions in reaction to the messages; and
transmitting commands to the plurality of self-checkout devices and/or one or more further devices according to the determined actions.

16. A computer program element comprising instructions which, when performed by a processor, cause the processor to perform a method according to claim 15.

17. A computer readable medium having instructions stored thereon which, when performed by a processor, cause the processor to perform a method according to claim 15.
